(19) Europäisches Patentamt
European Patent Office
Office européen des brevets

(11) **EP 4 553 329 A1**

(12) **EUROPEAN PATENT APPLICATION**
published in accordance with Art. 153(4) EPC

(43) Date of publication:
**14.05.2025  Bulletin 2025/20**

(21) Application number: **23835458.3**

(22) Date of filing: **03.07.2023**

(51) International Patent Classification (IPC):
**F16C 29/06** (2006.01)

(52) Cooperative Patent Classification (CPC):
**F16C 29/06**

(86) International application number:
**PCT/JP2023/024552**

(87) International publication number:
**WO 2024/009926 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **07.07.2022   JP 2022109426**

(71) Applicant: **THK Co., Ltd.
Tokyo 108-8506 (JP)**

(72) Inventor: **HAYASHI, Yuki
Tokyo 108-8506 (JP)**

(74) Representative: **Grünecker Patent- und
Rechtsanwälte
PartG mbB
Leopoldstraße 4
80802 München (DE)**

(54)  **MOTION GUIDANCE DEVICE**

(57)    A motion guide apparatus is provided in which even if at least part of a turn portion is a three-dimensional trajectory that is three-dimensional and complex, it is possible to approach at least one of a rolling path and a return portion substantially along a tangent line.

At least part of the three-dimensional trajectory of the turn portion is formed on the basis of a cross-sectional trajectory curve (14) in an X-Z cross section of the motion guide apparatus, and a longitudinal trajectory curve (15) drawn on a virtual plane VP where a longitudinal direction of the motion guide apparatus is a Y-axis, and a trajectory length $\omega$ from a turn start point A of the cross-sectional trajectory curve (14) is a length $\omega$ of a W-axis. X and Z coordinates of the three-dimensional trajectory are X and Z coordinates of the cross-sectional trajectory curve (14). A Y-coordinate of the three-dimensional trajectory is a Y-coordinate of the longitudinal trajectory curve (15) where the $\omega$ of the W-axis of the virtual plane VP is a variable.

*FIG. 6*

EP 4 553 329 A1

**Description**

Technical Field

The present invention relates to a motion guide apparatus in which a turn portion has a three-dimensional trajectory.

Background Art

A motion guide apparatus for guiding rectilinear or curvilinear motion of a movable body such as a table is known (refer to Patent Literature 1). The motion guide apparatus includes a rail member, and a block that is movable relative to the rail member. A rolling path is formed between a rolling portion of the rail member and a rolling portion of the block. The rolling path, a return portion, and turn portions connected to the rolling path and the return portion form a circulation path. A plurality of rolling elements is placed in the circulation path.

In a general motion guide apparatus, a trajectory of the rolling path is straight. A trajectory of the return portion is also straight. A trajectory of each of the turn portions connected to the rolling path and the return portion is an arc. The trajectory of each of the turn portions as viewed in a longitudinal direction (Y direction) of the motion guide apparatus, that is, the trajectory of each of the turn portions in an X-Z cross section of the motion guide apparatus, is straight.

Citation List

Patent Literature

Patent Literature 1: JP-A-2020-197296

Summary of Invention

Technical Problem

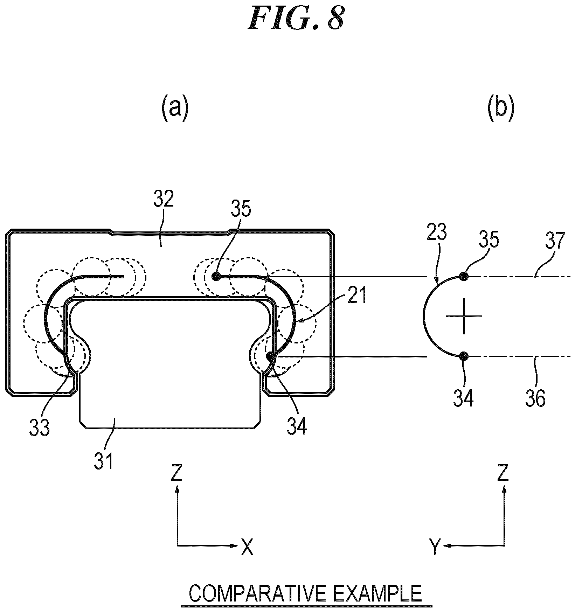

However, as illustrated in Fig. 8(a), the trajectory of the turn portion in the X-Z cross section of the motion guide apparatus may be a curve due to, for example, a constraint on the shape of the rail member and a constraint on the shape of the turn portion. In this case, the trajectory of the turn portion is a three-dimensional trajectory that is three-dimensional and complex.

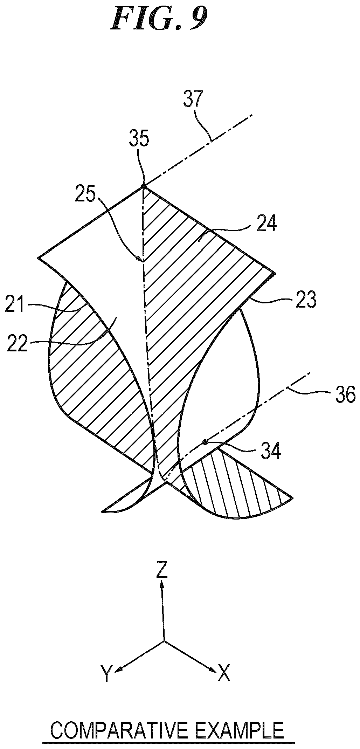

The inventor devised an idea of forming a three-dimensional trajectory that is three-dimensional and complex as follows. In other words, a trajectory curve (a cross-sectional trajectory curve 21) of the turn portion in the X-Z cross section illustrated in Fig. 8(a) is swept in a Y-axis direction to draw a curved surface 22 as illustrated in Fig. 9. Similarly, a trajectory curve 23 (a longitudinal trajectory curve) of the turn portion in the Y-Z cross section illustrated in Fig. 8(b) is swept in an X-axis direction to draw a curved surface 24 (indicated by hatching in Fig. 9) as illustrated in Fig. 9. These two curved surfaces 22 and 24 are then superimposed, and a curve 25 where the two curved surfaces 22 and 24 intersect with each other is set as the three-dimensional trajectory. Note that in Figs. 8(a), 8(b), and 9, a reference sign 31 denotes the rail member, a reference sign 32 denotes the block, a reference sign 33 denotes the rolling element, a reference sign 34 denotes a start point of the turn portion, a reference sign 35 denotes an end point of the turn portion, a reference sign 36 denotes the trajectory of the rolling path, and a reference sign 37 denotes the trajectory of the return portion.

However, the three-dimensional trajectory 25 of the turn portion formed in this manner has a problem that tangent lines thereto are not continuous with a straight line to be the trajectory 36 of the rolling path and a straight line to be the trajectory 37 of the return portion at the start point 34 and the end point 35. Hence, the movement of the rolling elements may be deteriorated, the repeated durability of the turn portion may decrease, and noise may be generated.

The present invention has been made in view of the above problems, and an object thereof is to provide a motion guide apparatus in which even if at least part of a turn portion is a three-dimensional trajectory that is three-dimensional and complex, it is possible to approach at least one of a rolling path and a return portion substantially along a tangent line.

Solution to Problem

In order to solve the above problems, the present invention is a motion guide apparatus including: a rail member; a block configured to be movable relative to the rail member; and a plurality of rolling elements placed in a rolling path between a rolling portion of the rail member and a rolling portion of the block, a return portion, and a turn portion connected to the rolling path and the return portion, in which at least part of a three-dimensional trajectory of the turn portion is formed on the basis of a cross-sectional trajectory curve in the X-Z cross section of the motion guide apparatus, and a longitudinal trajectory curve drawn on a virtual plane where a longitudinal direction of the motion guide apparatus is a Y-axis, and a trajectory length ω from a turn start point of the cross-sectional trajectory curve is a length ω of a W-axis, X and Z coordinates of the three-dimensional trajectory are X and Z coordinates of the cross-sectional trajectory curve, and a Y-coordinate of the three-dimensional trajectory is a Y-coordinate of the longitudinal trajectory curve where the ω of the W-axis of the virtual plane is a variable.

Advantageous Effects of Invention

According to the present invention, even if at least part of a turn portion is a three-dimensional trajectory that is three-dimensional and complex, it can approach at least one of a rolling path and a return portion substantially along a tangent line. Therefore, it is possible to encourage an improvement in the movement of the rolling elements, an improvement in the repeated durability of the turn portion, and noise reduction.

Brief Description of Drawings

Fig. 1 is a perspective view of a motion guide apparatus of one embodiment of the present invention.
Fig. 2(a) is a plan view of the motion guide apparatus of the embodiment, and Fig. 2(b) is a side view.
Fig. 3 is a front view of the motion guide apparatus of the embodiment.
Fig. 4(a) is a bottom perspective view of a block of the embodiment, and Fig. 4(b) is a top perspective view of the inverted block of the embodiment.
Fig. 5 is a schematic diagram illustrating a block processing method of the embodiment.
Fig. 6(a) illustrates a cross-sectional trajectory curve of the embodiment, and Fig. 6(b) illustrates a longitudinal trajectory curve of the embodiment.
Fig. 7(a) illustrates the cross-sectional trajectory curve of the embodiment, and Fig. 7(b) illustrates the longitudinal trajectory curve of the embodiment.
Fig. 8 is diagrams explaining a method for forming a turn portion of the motion guide apparatus of a comparative example (Fig. 8(a) illustrates a cross-sectional trajectory curve in the X-Z cross section, and Fig. 8(b) illustrates a longitudinal trajectory curve in the Y-Z cross section).
Fig. 9 is a diagram explaining the method for forming the turn portion of the motion guide apparatus of the comparative example (a perspective view illustrating an example in which two swept curved surfaces are superimposed).

Description of Embodiments

Embodiments of a motion guide apparatus according to the present invention are described in detail hereinafter with reference to the accompanying drawings. However, the motion guide apparatus according to the present invention can be embodied in various forms and is not limited to the embodiments described in the description. The embodiments are provided with the intention of enabling those skilled in the art to fully understand the invention by fully disclosing the description.

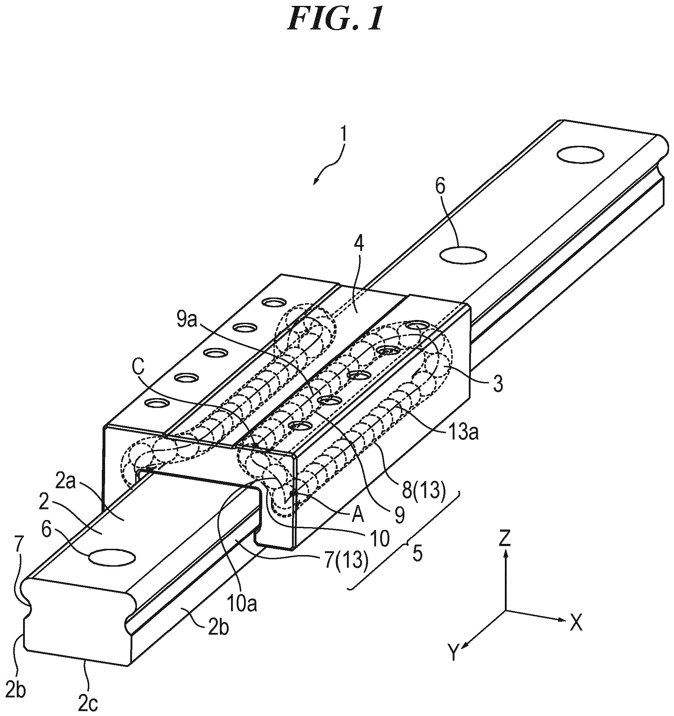

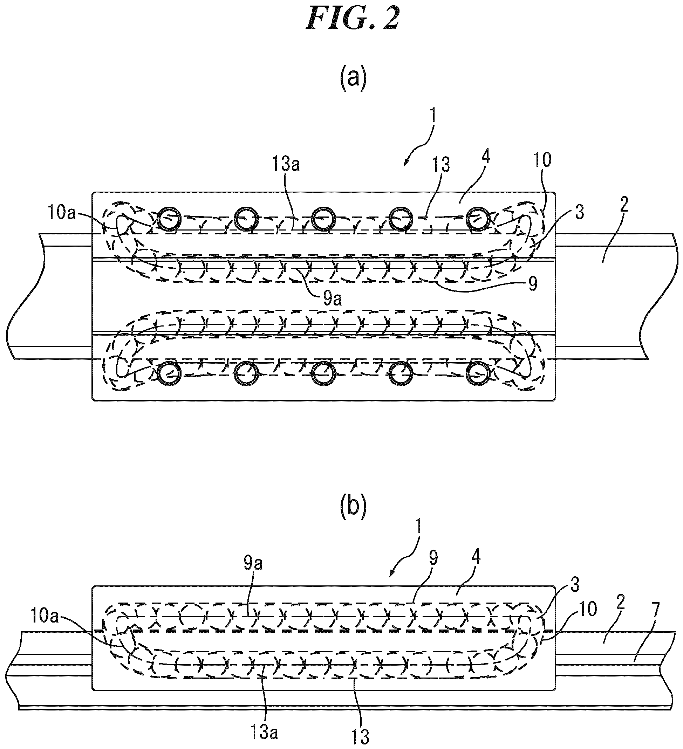

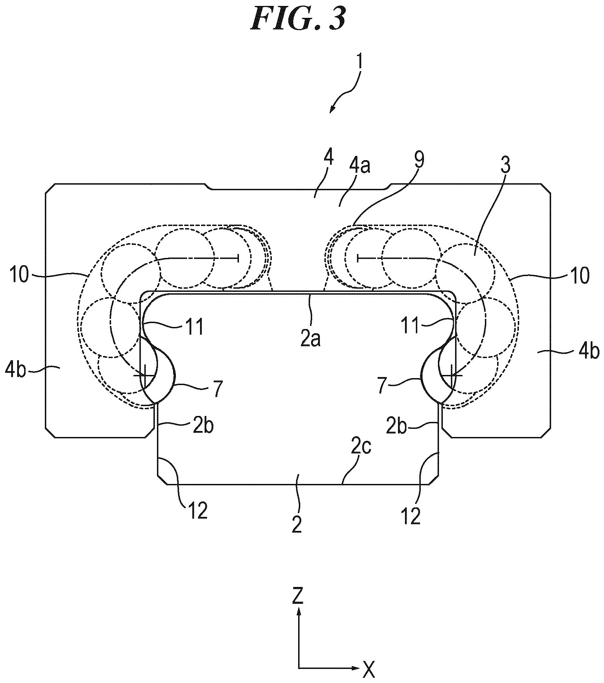

Fig. 1 illustrates a perspective view of a motion guide apparatus 1 of one embodiment of the present invention. Fig. 2 illustrates a plan view and a side view of the motion guide apparatus 1 of the embodiment. Fig. 3 illustrates a front view of the motion guide apparatus 1 of the embodiment.

The motion guide apparatus 1 of the embodiment is a linear guide including a rail member 2, and a block 4 that is movable relative to the rail member 2. A plurality of balls 3 is interposed as rolling elements between the rail member 2 and the block 4 in such a manner as to be capable of rolling motion. The block 4 includes a circulation path 5 for circulating the plurality of balls 3. A rolling path 13 between a rolling portion 7 of the rail member 2 and a rolling portion 8 of the block 4, a return portion 9, and turn portions 10 form the circulation path 5.

Note that in the following description, a longitudinal direction of the rail member 2, that is, a travel direction of the block 4, is a Y-axis, a height direction is a Z-axis, and a horizontal direction is an X-axis.

As illustrated in Fig. 1, the rail member 2 is a rail extending linearly. The rail member 2 includes a top surface 2a, a pair of left and right side surfaces 2b, and an undersurface 2c. The rolling portion 7 extending in the longitudinal direction is formed on the side surface 2b of the rail member 2. The rolling portion 7 is a Gothic arch-shaped groove. The rolling portion 7 may be a circular arc-shaped groove. A plurality of mounting holes 6 for mounting the rail member 2 on a base is formed in the top surface 2a of the rail member 2. Note that the rail member 2 may extend in a curved path. The number of the rolling portions 7 can be set at, for example, two or four as appropriate. Moreover, the placement of the rolling portion 7 can also be set as appropriate.

As illustrated in Fig. 3, the block 4 has an approximately U shape in cross section and is placed in such a manner as to be astride the rail member 2. The block 4 includes a web portion 4a facing the top surface 2a of the rail member 2, and a pair of sleeve portions 4b that hangs down from two end portions in a left-and-right direction of the web portion 4a and faces the side surfaces 2b of the rail member 2. The block 4 of the motion guide apparatus 1 of the embodiment is a single structure. As illustrated in Fig. 1, the rolling portion 8, the return portion 9, and the turn portions 10 are formed in the block 4. The rolling portion 8 of the block 4 faces the rolling portion 7 of the rail member 2.

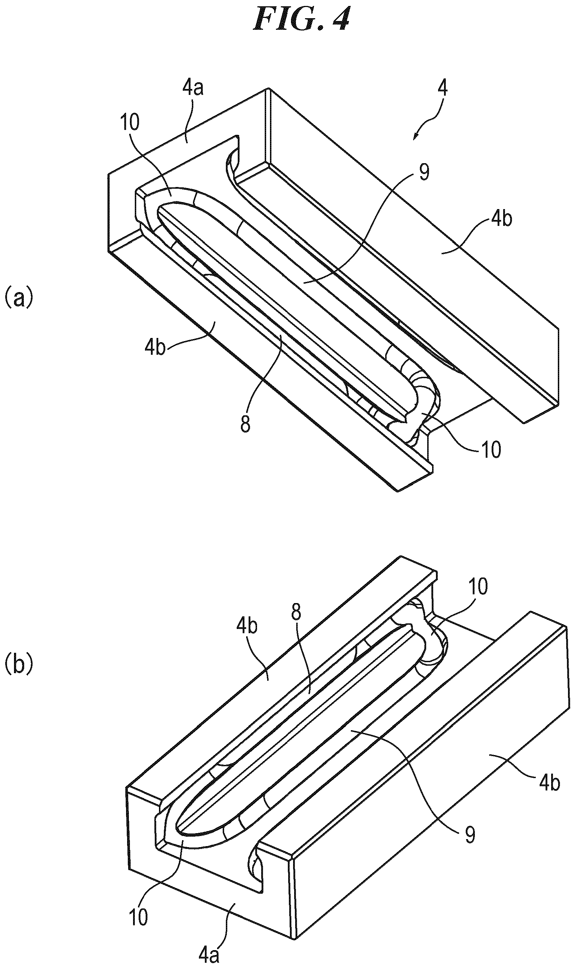

Fig. 4(a) illustrates a bottom perspective view of the block 4, and Fig. 4(b) illustrates a top perspective view of the inverted block 4. The rolling portion 8 is formed in the sleeve portion 4b of the block 4. The rolling portion 8 is a Gothic arch-shaped groove. The rolling portion 8 may be a circular arc-shaped groove.

In the web portion 4a of the block 4, the return portion 9 is formed substantially parallel to the rolling portion 8. The return portion 9 is a groove that is open toward the rail member 2. Note that the return portion 9 may be a through-hole.

In the block 4, the turn portions 10 connected to the rolling portion 8 and the return portion 9 are formed from the sleeve portion 4b to the web portion 4a of the block 4. The turn portions 10 are grooves that are open toward the rail member 2. Note that the turn portions 10 may also be through-holes.

As illustrated in Fig. 3, in the motion guide apparatus 1 of the embodiment, of the pair of side surfaces 11 and 12 of the rail member 2 outside the rolling portion 7, the side surface 11 that is on the upper side in the Z direction and comes into contact with the balls 3 protrudes toward the block 4 more than the side surface 12 that is on the lower side and does not come into contact with the balls 3. The cross-sectional shape of the upper side surface 11 of the rail member 2 is an approximately arc shape. The turn portions 10 of the block 4 curve along the upper side surface 11. Moreover, the turn portions 10 extend straight along the top surface 2a of the rail member 2. In other words, the turn portions 10 are each formed by a combination of an arc and a straight line, and have an approximately J shape.

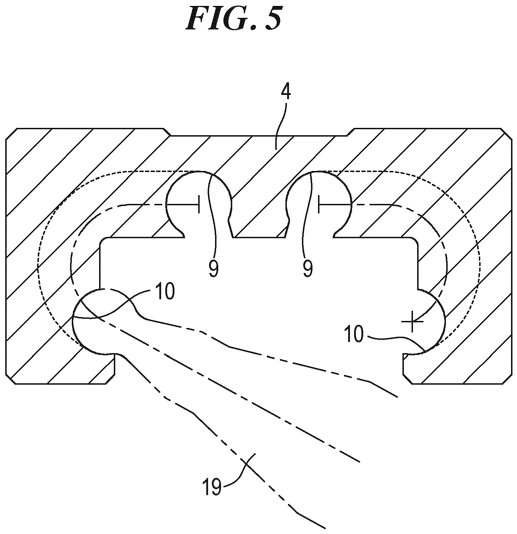

As illustrated in Fig. 5, the rolling portion 8 (refer to Fig. 4), the return portion 9, and the turn portions 10 of the block 4 are continuously formed in the block 4 using a cutting tool 19 such as an end mill. Connecting portions of the rolling portion 8, the turn portions 10, and the return portion 9 are seamless, and there are no joints. Note that the cutting tool 19 is not limited to an end mill. Moreover, the rolling portion 8, the turn portions 10, and the return portion 9 may be continuously formed in the block 4 by plasticity processing such as forging or pressing other than cutting.

Referring back to Figs. 1 and 2, the plurality of balls 3 is placed in the circulation path 5 including the rolling path 13, the return portion 9, and the turn portions 10. When the block 4 is moved relative to the rail member 2, the balls 3 roll along the rolling path 13. The balls 3 that have moved to one end of the rolling path 13 are guided to the turn portion 10, move in an opposite direction along the return portion 9, and then are guided from the other turn portion 10 to the other end of the rolling path 13.

The rolling path 13 has a straight trajectory 13a. The return portion 9 also has a straight trajectory 9a. The turn portions 10 each have a three-dimensional trajectory 10a that is three-dimensional and complex. Note that the trajectories 13a, 9a, and 10a of the rolling path 13, the return portion 9, and the turn portions 10 are center lines of these paths. In the return portion 9, there is a slight play between the balls 3 and a wall surface of the return portion 9. The trajectory 9a of the return portion 9 is a center line of the return portion 9. In parts of the rolling path 13 and the turn portions 10, the balls 3 move while being sandwiched between the rail member 2 and the block 4. Parts of the trajectories 13a and 10a of the rolling path 13 and the turn portions 10 may be lines drawn by centers of the travelling balls 3.

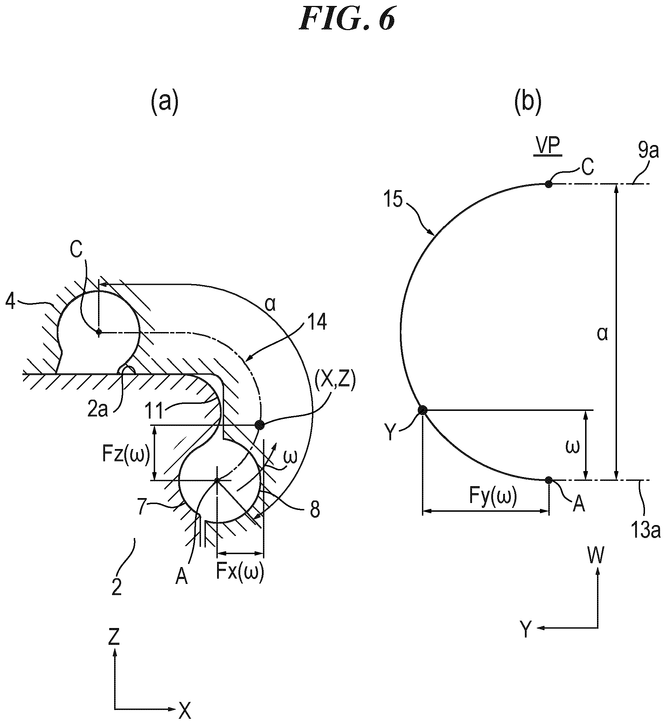

A method for forming the three-dimensional trajectory 10a of the turn portion 10 is described below. The three-dimensional trajectory 10a of the turn portion 10 is formed on the basis of a cross-sectional trajectory curve 14 (refer to Fig. 6(a)) in the X-Z cross section of the motion guide apparatus 1, and a longitudinal trajectory curve 15 (refer to Fig. 6(b)) drawn on a virtual plane VP where the longitudinal direction of the motion guide apparatus 1 is the Y-axis and a length $\omega$ of the cross-sectional trajectory curve 14 is the length $\omega$ of a W-axis.

As illustrated in Fig. 6(a), the cross-sectional trajectory curve 14 is a curve indicating the actual path of the trajectory along which the balls 3 circulate, in the X-Z cross section of the motion guide apparatus 1. A is a turn start point, and C is a turn end point. The cross-sectional trajectory curve 14 is determined in advance due to, for example, a constraint on the shape of the rail member 2 and a constraint on the shape of the turn portions 10. For example, in this embodiment, the cross-sectional trajectory curve 14 is determined in advance due to the constraint on the shape of the rail member 2, and is formed by connecting a single arc and a straight line in such a manner that the balls 3 can move along the side surface 2b and the top surface 2a of the rail member 2. Naturally, the cross-sectional trajectory curve 14 is not limited to the above, and may be formed by connecting a plurality of arcs having different curvatures instead of a single arc. Moreover, the cross-sectional trajectory curve 14 may be formed only by, for example, an arc, an ellipse, a clothoid curve, or a spline curve instead of connecting an arc and a straight line.

As illustrated in Fig. 6(b), the longitudinal trajectory curve 15 is a curve of which the trajectory direction is reversed 180°. A is a turn start point, and C is a turn end point. The longitudinal trajectory curve 15 is connected to the trajectory 13a of the rolling path 13 and the trajectory 9a of the return portion 9. The trajectory 13a of the rolling path 13 and the trajectory 9a of the return portion 9 are straight and parallel to the Y-axis. A turn trajectory width $\alpha$ of the longitudinal trajectory curve 15, that is, a distance between the trajectory 13a of the rolling path 13 and the trajectory 9a of the return portion 9, is equal to a total trajectory length $\alpha$ (refer to Fig. 6(a)) of the cross-sectional trajectory curve 14.

The Y-axis of the virtual plane VP is the longitudinal direction of the motion guide apparatus 1, that is, a relative travel direction of the block 4. The W-axis of the virtual plane VP is different from the Z-axis of the motion guide apparatus 1. The variable $\omega$ of the W-axis is not a length in the Z-axis direction of the motion guide apparatus 1 but the trajectory length $\omega$ (refer to Fig. 6(a)) from the turn start point A of the cross-sectional trajectory curve 14. If the cross-sectional trajectory curve 14 is, for example, an arc, the trajectory length $\omega$ is the arc length.

The longitudinal trajectory curve 15 is, for example, a curve in which a tangent line to a single arc etc. is continuous. The longitudinal trajectory curve 15 may be a curve in which a tangent line to, for example, an ellipse, a clothoid curve, or a spline curve is continuous.

The longitudinal trajectory curve 15 is connected to the trajectory 13a of the rolling path 13 in such a manner that a tangent line thereto is substantially continuous with the trajectory 13a at the turn start point A. Moreover, the longitudinal trajectory curve 15 is connected to the trajectory 9a of the return portion 9 in such a manner that a tangent line thereto is substantially continuous with the trajectory 9a at the turn end point C. Note that it is desirable that the longitudinal trajectory curve 15 be connected to the trajectory 13a of the rolling path 13 and the trajectory 9a of the return portion 9 in such a manner that the tangent lines are continuous with the trajectories 13a and 9a respectively, but may be connected to the trajectory 13a of the rolling path 13 and the trajectory 9a of the return portion 9 in such a manner that the tangent line is continuous with at least one of the trajectories 13a and 9a.

Let the horizontal direction of the motion guide apparatus 1 be an X-coordinate, let the height direction be a Z-coordinate, and let the longitudinal direction be a Y-coordinate. The coordinates of the three-dimensional trajectory 10a of the turn portion 10 are expressed by the following continuous X, Y, and Z coordinates using the trajectory length $\omega$ from the turn start point A of the cross-sectional trajectory curve 14.

(Equation 1)

$$(X,\ Y,\ Z)\ =\ (F_X(\omega),\ F_Y(\omega),\ F_Z(\omega))\ \ \ldots\ \ (1)$$

Here, the X and Z coordinates of the three-dimensional trajectory 10a are the X and Z coordinates $(F_X(\omega), F_Z(\omega))$ of the cross-sectional trajectory curve 14. The Y-coordinate of the three-dimensional trajectory 10a is the Y-coordinate $(F_Y(\omega))$ of the longitudinal trajectory curve 15 where $\omega$ of the W-axis of the virtual plane VP is a variable.

An example of the method for forming the three-dimensional trajectory 10a is described below. As illustrated in Fig. 6(a), the X and Z coordinates of the three-dimensional trajectory 10a are the coordinates $(F_X(\omega), F_Z(\omega))$ of the cross-sectional trajectory curve 14 where the trajectory length $\omega$ from the turn start point A is a variable.

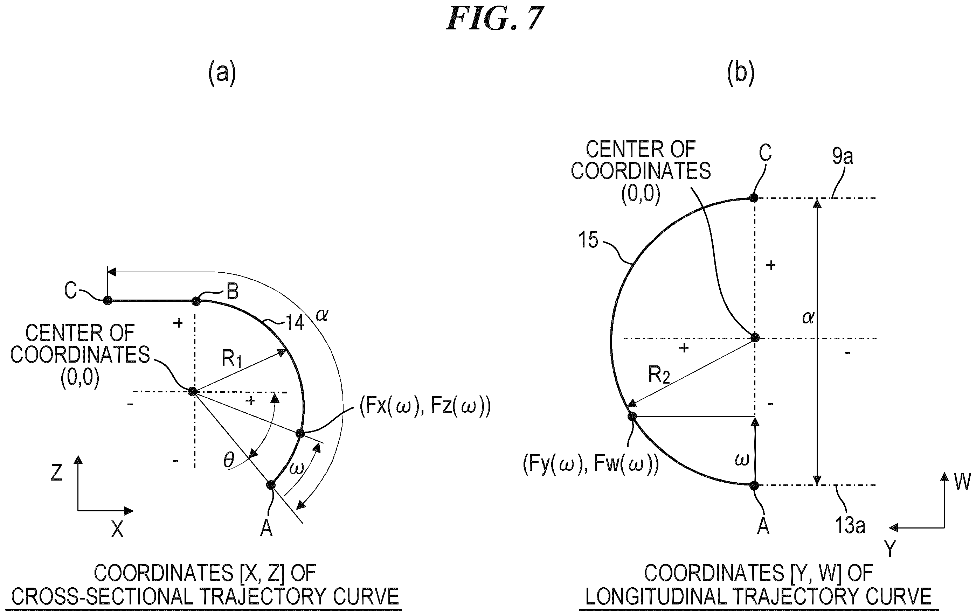

If the cross-sectional trajectory curve 14 is formed by connecting an arc and a straight line as illustrated in Fig. 7(a), the X and Z coordinates of the cross-sectional trajectory curve 14 are expressed as follows:

(Equation 2)

$$(X,\ Z)\ =\ (F_X(\omega),\ F_Z(\omega))\ \ \ldots\ \ (2)$$

In a section from A to B,

$$F_x(\omega)=\sqrt{\frac{R_1{}^2}{1+tan^2(\frac{\omega}{R_1}-\theta)}}$$

$$F_z(\omega)=\tan(\frac{\omega}{R_1}-\theta)\times\sqrt{\frac{R_1{}^2}{1+tan^2(\frac{\omega}{R_1}-\theta)}}$$

In a section from B to C,

$$F_x(\omega) = R_1 \times \left(\frac{\pi}{2} + \theta\right) - \omega$$

$$F_Z(\omega) = R_1$$

Here, A is the turn start point, B is the curvature change point on the cross-sectional trajectory curve, and C is the turn end point. $\omega$ is the trajectory length from the turn start point A, and is a variable that changes from 0 to $\alpha$. $\theta$ is the turn start angle, $R_1$ is the cross-sectional trajectory radius, and $\alpha$ is the total cross-sectional trajectory length.

As illustrated in Fig. 6(b), the Y-coordinate of the three-dimensional trajectory 10a is the Y-coordinate ($F_Y(\omega)$) of the longitudinal trajectory curve 15 where $\omega$ of the W-axis of the virtual plane VP is a variable.

If the longitudinal trajectory curve 15 is formed by a single arc as illustrated in Fig. 7(b), the Y-coordinate of the three-dimensional trajectory 10a is expressed as follows:
(Equation 3)

$$Y = F_Y(\omega) \quad \ldots \quad (3)$$

In a section from A to C,

$$F_Y(\omega) = -\omega^2 + 2 \times R_2 \times \omega$$

$$F_W = \omega - R_2$$

where $R_2$ is the longitudinal trajectory radius, and $R_2 = \alpha/2$.

The X, Y, and Z coordinates of the three-dimensional trajectory 10a taking a variable as the trajectory length $\omega$ from the turn start point A can be obtained from $F_X(\omega)$, $F_Z(\omega)$ of equation (2) and $F_Y(\omega)$ of equation (3). Note that $F_W$ in equation (3) is not used to obtain the coordinates of the three-dimensional trajectory 10a, but is referred to for reference.

Fig. 1 illustrates the three-dimensional trajectory 10a of the turn portion 10 formed on the basis of the cross-sectional trajectory curve 14 and the longitudinal trajectory curve 15. The three-dimensional trajectory 10a is formed in this manner, so that even if the three-dimensional trajectory 10a is a three-dimensional and complex trajectory, it can be connected to the trajectory 13a of the rolling path 13 in such a manner that the tangent line is substantially continuous with the trajectory 13a at the turn start point A. Moreover, the three-dimensional trajectory 10a can be connected to the trajectory 9a of the return portion 9 in such a manner that the tangent line is substantially continuous with the trajectory 9a at the turn end point C.

Up to this point, the configuration of the motion guide apparatus 1 of the embodiment has been described. The motion guide apparatus 1 of the embodiment has the following effects:

At least part of the three-dimensional trajectory 10a of the turn portion 10 is formed on the basis of the cross-sectional trajectory curve 14 and the longitudinal trajectory curve 15 of the motion guide apparatus 1. Therefore, even if at least part of the turn portion 10 is a three-dimensional trajectory that is three-dimensional and complex, it can approach at least one of the rolling path 13 and the return portion 9 substantially along the tangent line. Hence, it is possible to encourage an improvement in the movement of the balls 3, an improvement in the repeated durability of the turn portion 10, and noise reduction.

On the virtual plane VP, the longitudinal trajectory curve 15 is connected to at least one of the trajectory 13a of the rolling path 13 and the trajectory 9a of the return portion 9 in such a manner that the tangent line is continuous with the at least one of the trajectories 13a and 9a. Therefore, the three-dimensional trajectory 10a of the turn portion 10 can be connected to at least one of the rolling path 13 and the return portion 9 in such a manner that the tangent line is continuous with the at least one of the rolling path 13 and the return portion 9.

The turn trajectory width ($\alpha$) of the longitudinal trajectory curve 15 is equal to the total trajectory length ($\alpha$) of the cross-sectional trajectory curve 14. Therefore, the three-dimensional trajectory 10a of the turn portion 10 can be smoothly formed along its entire length.

At least the rolling portion 8 and the turn portions 10 are continuously formed in the block 4 that is a single structure, and therefore, can be joined together seamlessly.

Note that the present invention is not limited to concretization of the above embodiment, and can be concretized in other embodiments within the scope that does not change the purport of the present invention.

In the above embodiment, the cross-sectional trajectory curve in the X-Z cross section of the motion guide apparatus includes a curve and a straight line, but may include only a curve. Moreover, in the above embodiment, the longitudinal trajectory curve on the virtual plane of the motion guide apparatus includes only a curve, but may partially include a straight line.

In the above embodiment, the rolling portion and the turn portions are formed in the block that is a single structure. However, the block may include a block body and lid members that are mounted on end surfaces of the block body, the rolling portion may be formed in the block body, and the turn portions may be formed in the lid members. In this case, as in a general linear guide, for example, two or four rolling portions may be formed in the block body, for example, two or four turn portions may be formed in each of the lid members, and the return portions of the block body may be placed in the sleeve portions of the block body. Moreover, the return portions of the block body may be formed as through-holes in such a manner as to have a closed cross section, or the lid members may each include an end plate and an inner piece in such a manner that the turn portions of the lid members have a closed cross section.

In the above embodiment, the example of a full ball type has been described. However, a spacer may be interposed between the balls. Moreover, the example in which the rolling elements are balls has been described. However, the rolling elements may be rollers.

In the above embodiment, the example of the outer block type linear guide in which the block having an approximately U shape in cross section is astride the rail member has been described. However, an inner block type linear guide may be used in which an inner block is placed in an outer rail having an approximately U shape in cross section.

In the above embodiment, the example in which the motion guide apparatus is a linear guide has been described. However, the motion guide apparatus may be a ball spline.

The present description is based on Japanese Patent Application No. 2022-109426 filed on July 7, 2022. The entire contents thereof are incorporated herein.

Reference Signs List

| | |
|---|---|
| 1 | Motion guide apparatus |
| 2 | Rail member |
| 3 | Ball (rolling element) |
| 4 | Block |
| 7 | Rolling portion of rail member |
| 8 | Rolling portion of block |
| 9 | Return portion |
| 9a | Trajectory of return portion |
| 10 | Turn portion |
| 10a | Three-dimensional trajectory of turn portion |
| 13 | Rolling path |
| 13a | Trajectory of rolling path |
| 14 | Cross-sectional trajectory curve |
| 15 | Longitudinal trajectory curve |
| VP | Virtual plane |

**Claims**

1. A motion guide apparatus comprising:

   a rail member;
   a block configured to be movable relative to the rail member; and
   a plurality of rolling elements placed in a rolling path between a rolling portion of the rail member and a rolling portion of the block, a return portion, and a turn portion connected to the rolling path and the return portion, wherein at least part of a three-dimensional trajectory of the turn portion is formed on the basis of a cross-sectional trajectory curve in an X-Z cross section of the motion guide apparatus, and a longitudinal trajectory curve drawn on a virtual plane where a longitudinal direction of the motion guide apparatus is a Y-axis, and a trajectory length $\omega$

from a turn start point of the cross-sectional trajectory curve is a length ω of a W-axis,
X and Z coordinates of the three-dimensional trajectory are X and Z coordinates of the cross-sectional trajectory curve, and
a Y-coordinate of the three-dimensional trajectory is a Y-coordinate of the longitudinal trajectory curve where the ω of the W-axis of the virtual plane is a variable.

2. The motion guide apparatus according to claim 1, wherein the longitudinal trajectory curve is connected to at least one of a trajectory of the rolling path and a trajectory of the return portion in such a manner that a tangent line thereto is continuous with the at least one of the trajectories on the virtual plane.

3. The motion guide apparatus according to claim 1 or 2, wherein a turn trajectory width (α) of the longitudinal trajectory curve is equal to a total trajectory length (α) of the cross-sectional trajectory curve.

4. The motion guide apparatus according to claim 1 or 2, wherein at least the rolling portion and the turn portion are continuously formed in the block being a single structure.

# FIG. 1

# FIG. 2

## (a)

## (b)

# FIG. 3

# FIG. 4

(a)

(b)

# *FIG. 5*

## *FIG. 6*

(a)

(b)

# FIG. 7

(a)

COORDINATES [X, Z] OF
CROSS-SECTIONAL TRAJECTORY CURVE

(b)

COORDINATES [Y, W] OF
LONGITUDINAL TRAJECTORY CURVE

## FIG. 8

(a)                                          (b)

COMPARATIVE EXAMPLE

# FIG. 9

COMPARATIVE EXAMPLE

## INTERNATIONAL SEARCH REPORT

| International application No. |
|---|
| **PCT/JP2023/024552** |

### A. CLASSIFICATION OF SUBJECT MATTER

*F16C 29/06*(2006.01)i
FI:  F16C29/06

According to International Patent Classification (IPC) or to both national classification and IPC

### B. FIELDS SEARCHED

Minimum documentation searched (classification system followed by classification symbols)

F16C29/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2001-241437 A (NIPPON THOMPSON CO., LTD.) 07 September 2001 (2001-09-07) entire text, all drawings | 1-4 |
| A | JP 2003-035314 A (NSK LTD.) 07 February 2003 (2003-02-07) entire text, all drawings | 1-4 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/024552**

| Patent document cited in search report | | | Publication date (day/month/year) | Patent family member(s) | Publication date (day/month/year) |
|---|---|---|---|---|---|
| JP | 2001-241437 | A | 07 September 2001 | US 2001/0017951 A1<br>entire text, all drawings | |
| JP | 2003-035314 | A | 07 February 2003 | (Family: none) | |

Form PCT/ISA/210 (patent family annex) (January 2015)

**REFERENCES CITED IN THE DESCRIPTION**

**Patent documents cited in the description**

- JP 2020197296 A

- JP 2022109426 A